# EUROPEAN PATENT APPLICATION

(11) **EP 4 733 134 A2**
(43) Date of publication of application: **29.04.2026**
(21) Application number: 26164197.1
(22) Date of filing: 14.06.2023
(51) Int. Cl.: B60N 2/28

(54) **CHILD SAFETY SEAT**

(30) Priority: 14.06.2022 CN 202210674743
(62) Divisional of application: 23732574.1
(71) Applicant: Wonderland Switzerland AG, 6312 Steinhausen (CH)
(72) Inventor: Wu, Bo, Guangdong, 523648 (CN); Guo, Zhengwen, Guangdong, 523648 (CN)
(74) Representative: ERNICKE Patent- und Rechtsanwälte PartmbB

(57) **Abstract**

A child safety seat (100) is disclosed. The child safety seat (100) includes: a seat housing (1) including a seat portion (11) for supporting a hip of a child; an adjustment belt (22) having a rear end connected to a shoulder belt (21) of the child safety seat (100), and a front end passing through a front end of the seat portion (11); a locking member (3) arranged in the seat portion (11) and locking the adjustment belt (22) to prevent movement of the adjustment belt (22); a seat cover (4) including seat cloth (41) covering the seat portion (11), the seat cloth (41) being provided with an operation port (410) for allowing a hand to pass through to unlock the locking member (3); and a barrier structure (5) configured to prevent, through the operation port (410), sundries from falling into the locking member (3).

## Description

### Technical field

The present disclosure relates to a child safety seat.

### Background

A child safety seat (including an infant carrier) is generally placed on a vehicle seat for use and is securely supported on the vehicle seat by means of attachments such as top straps, ISOFIX devices, and support legs. The child safety seat may use its own safety belt system to restrain a child in a seat of the child safety seat, so as to protect the child from impact in case of vehicle collision, emergency braking, and other accidents.

The main structure of a typical child safety seat includes a seat housing and a seat cover covering the exterior of the seat housing. The seat housing includes a seat portion for supporting a hip of a child and a backrest portion for supporting a back of the child. The seat cover correspondingly includes seat cloth covering the seat portion and backrest cloth covering the backrest portion. The seat cloth is provided with a through hole and an operation port. The operation port is located behind the through hole. The backrest cloth and the backrest portion are provided with respective shoulder belt holes.

In the related art, the safety belt system of the child safety seat includes a crotch belt, two shoulder belts, an adjustment belt, and a locking member. The crotch belt is connected to the seat cloth and provided with a female buckle. A portion of each shoulder belt in front of the backrest portion is provided with a male buckle matching the female buckle, and a rear end of each shoulder belt passing through the corresponding shoulder belt hole is connected to a rear end of the adjustment belt through a same fastener. The adjustment belt extends forward in the seat portion until a front end of the adjustment belt passes through the through hole of the seat cloth. The front end of the adjustment belt is pulled, and a length of each shoulder belt in front of the backrest portion can be reduced, thereby restraining a child sitting on the child safety seat. The locking member is mounted in the seat portion. The locking member is configured to lock the adjustment belt to prevent release of each shoulder belt caused by undesired displacement of the adjustment belt. When there is a need to release the length of each shoulder belt in front of the backrest portion, a hand of a parent is required to pass through the operation port to unlock the locking member, so that the locking member release the adjustment belt.

To enable the hand of the parent to operate the locking member easily through the operation port, the operation port is generally large, which leads to easy entry of foreign objects (for example, the child's food or toy parts to play with) into the locking member through the operation port, thereby trapping the locking member. As a result, the locking member cannot be locked or unlocked normally, so that the shoulder belts cannot be adjusted and the use is affected.

### Summary

An objective of the present disclosure is to provide a child safety seat, which can effectively prevent sundries from entering the locking member through the operation port.

The present disclosure provides a child safety seat, including: a seat housing including a seat portion for supporting a hip of a child; an adjustment belt having a rear end connected to a shoulder belt of the child safety seat, and a front end passing through a front end of the seat portion; a locking member arranged in the seat portion and locking the adjustment belt to prevent movement of the adjustment belt; a seat cover including seat cloth covering the seat portion, the seat cloth being provided with an operation port for allowing a hand to pass through to unlock the locking member; and a barrier structure configured to prevent, through the operation port, sundries from falling into the locking member.

Further, the barrier structure includes a blocking bag with a predetermined depth, and a mouth of the blocking bag is arranged around the operation port and connected to the seat cloth.

Further the blocking bag is made of elastic fabric, and/or a periphery of the mouth of the blocking bag is connected to the seat cloth by sewing or gluing.

Further, the periphery of the mouth of the blocking bag is connected to a first position of the seat cloth, and part of a body of the blocking bag is connected to a second position on an inner side surface of the seat cloth. The second position is further away from the operation port than the first position.

Further, the part of the body of the blocking bag is connected to the second position through a traction belt, or the part of the body of the blocking bag is connected to the second position by sewing or gluing.

Further, the barrier structure includes a first blocking sheet made of elastic fabric, and a periphery of the first blocking sheet is connected to the seat cloth to close the operation port.

Further, the periphery of the first blocking sheet is connected to an inner side surface of the seat cloth, and an area of the first blocking sheet is larger than that of the operation port. Alternatively, the periphery of the first blocking sheet is connected to a periphery of the operation port, so that the first blocking sheet is located in the operation port.

Further, the operation port is located directly above the locking member.

Further, the barrier structure includes a second blocking sheet covering the operation port on an outer side surface of the seat cloth, a part of a periphery of the second blocking sheet is connected to the outer side surface of the seat cloth, and another part of the periphery of the second blocking sheet is connected to the outer side surface of the seat cloth to form a gap communicated with the operation port.

Further, the barrier structure includes a first flip cover, and a rear edge of the first flip cover is connected to an outer side surface of the seat cloth. The first flip cover is rotatable downward around the rear edge thereof to a closed position to close the operation port, and the first flip cover is rotatable upward around the rear edge thereof to an open position to expose the operation port.

Further, a holding device configured to hold the first flip cover at the closed position is arranged between the first flip cover and the seat cloth.

Further, the holding device includes fasteners cooperating with each other, and the fasteners are hook and loop fasteners, magnetic members, or snaps.

Further, the barrier structure includes an adhesive layer covering the locking member, and the adhesive layer is provided with an inlet and an outlet for the adjustment belt to pass through.

Further, the seat portion includes a recess for accommodating the locking member; and the barrier structure includes a second flip cover having a rear end connected to the seat portion through a pivot shaft, and a front end used as an operating end. The second flip cover is rotatable around the pivot shaft to a closed position to cover the recess above the locking member, and the second flip cover is rotatable around the pivot shaft to an open position to expose the locking member.

Further, an elastic member is provided between the second flip cover and the seat portion, and the elastic member is configured to hold the second flip cover at the closed position.

Further, the seat portion includes a recess for accommodating the locking member, and the barrier structure includes a third blocking sheet made of elastic fabric. The third blocking sheet is connected to the seat portion and covers the recess above the locking member to separate the locking member from the operation port.

Further, the operation port is arranged on a front side surface of the seat cloth, and the front end of the adjustment belt passes through the operation port. The barrier structure includes a third flip cover, and a rear edge of the third flip cover is connected to the seat cloth and located above the operation port, so that the third flip cover shields the operation port.

Further, a front side surface of the seat cloth is provided with a through hole, and the adjustment belt passes through the through hole. The seat cloth is provided with a shielding brim above the through hole, the shielding brim shielding the through hole.

Further, the seat portion includes a recess for accommodating the locking member. The seat cloth is provided with a partition plate arranged above the recess and covers the locking member. The operation port is located in front of the partition plate.

According to the child safety seat of the present disclosure, the barrier structure is provided, which can effectively block sundries from falling into the locking member through the operation port, preventing problems such as trapping of the locking member and failure of adjustment of the shoulder belt due to entry of the sundries into the locking member.

### Brief description of the drawings

FIG. 1 is perspective diagram illustrating a child safety seat according to a first embodiment of the present disclosure.
FIG. 2 is perspective diagram illustrating a part of the child safety seat according to the first embodiment of the present disclosure, with seat cloth being upturned to expose a seat portion and a blocking bag.
FIG. 3 is perspective diagram illustrating a locking member of the child safety seat according to a first embodiment of the present disclosure.
FIG. 4 schematically shows a sectional view of the locking member of the child safety seat according to the first embodiment of the present disclosure.
FIG. 5 schematically shows a partial sectional view of a seat cover and the blocking bag of the child safety seat according to the first embodiment of the present disclosure.
FIG. 6 schematically shows a bottom view of the seat cover and the blocking bag shown in FIG. 5.
FIG. 7 schematically shows a modification of a partial sectional structure of the seat cover and the blocking bag.
FIG. 8 schematically shows another modification of the partial sectional structure of the seat cover and the blocking bag.
FIG. 9 schematically shows a bottom view of the seat cover and the blocking bag shown in FIG. 8.
FIG. 10 schematically shows yet another modification of the partial sectional structure of the seat cover and the blocking bag.
FIG. 11 schematically shows a partial sectional view of a seat cover and a first blocking sheet of a child safety seat according to a second embodiment of the present disclosure.
FIG. 12 schematically shows a bottom view of the seat cover and the first blocking sheet shown in FIG. 11.
FIG. 13 schematically shows a modification of a partial sectional structure of the seat cover and the first blocking sheet.
FIG. 14 schematically shows a top view of the seat cover and the first blocking sheet shown in FIG. 13.
FIG. 15 schematically shows a partial top perspective view of a seat cover and a second blocking sheet of a child safety seat according to a third embodiment of the present disclosure.
FIG. 16 schematically shows a partial top perspective view of a seat cover and a first flip cover of a child safety seat according to a fourth embodiment of the present disclosure, with the first flip cover being at a closed position.
FIG. 17 schematically shows a partial top perspective view of the seat cover and the first flip cover of the child safety seat according to the fourth embodiment of the present disclosure, with the first flip cover being at an open position.
FIG. 18 schematically shows a partial perspective view of a child safety seat according to a fifth embodiment of the present disclosure, with seat cloth being upturned to expose a seat portion and an adhesive layer.
FIG. 19 schematically shows a sectional view of the adhesive layer in FIG. 18 and a locking member located in the adhesive layer.
FIG. 20 schematically shows a partial perspective view of a child safety seat according to a sixth embodiment of the present disclosure, with seat cloth being upturned to expose a seat portion and a second flip cover, and the second flip cover being at a closed position.
FIG. 21 schematically shows a partial perspective view of the child safety seat according to the sixth embodiment of the present disclosure, with the seat cloth being upturned to expose the seat portion and the second flip cover, and the second flip cover being at an open position to expose a locking member.
FIG. 22 schematically shows a partial perspective view of a child safety seat according to a seventh embodiment of the present disclosure, with seat cloth being upturned to expose a seat portion and a third blocking sheet;
FIG. 23 schematically shows a partial top perspective view of a seat cover and a shielding brim of a child safety seat according to an eighth embodiment of the present disclosure.
FIG. 24 schematically shows a partial top perspective view of a seat cover and a third flip cover of a child safety seat according to a ninth embodiment of the present disclosure.

### Detailed description of the embodiments

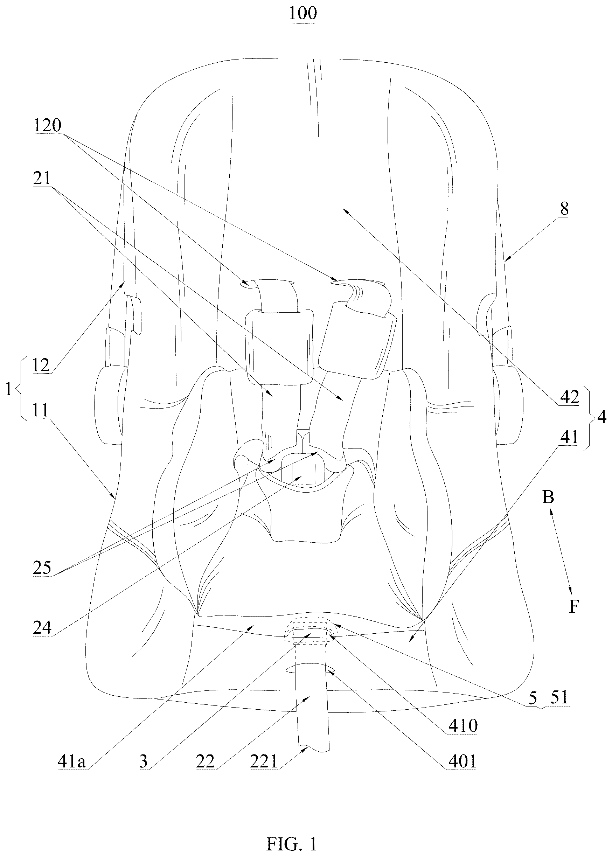

Referring to FIG. 1, a child safety seat 100 according to a first embodiment of the present disclosure is illustrated, which may include a main structure, a safety belt system attached to the main structure, and other attachments for securing the child safety seat 100 (such as ISOFIX devices or support legs). When the child safety seat 100 is an infant carrier, it may have a handle 8.

The main structure of the child safety seat 100 includes a seat housing 1 and a seat cover 4 covering the exterior of the seat housing 1. The seat housing 1 includes a seat portion 11 for supporting a hip of a child and a backrest portion 12 for supporting a back of the child. The seat cover 4 correspondingly includes seat cloth 41 covering the seat portion 11 and backrest cloth 42 covering the backrest portion 12. The seat cloth 41 is provided with a through hole 401 and an operation port 410. The operation port 410 is located behind the through hole 401. The backrest cloth 42 and the backrest portion 12 are provided with respective shoulder belt holes 120.

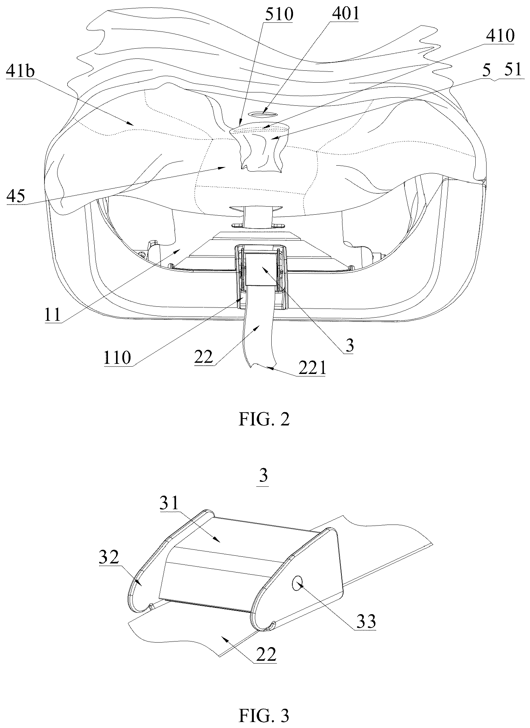

The safety belt system of the child safety seat 100 may include a crotch belt (not shown in FIG. 1), two shoulder belts 21, an adjustment belt 22, and a locking member 3. The crotch belt is connected to the seat cloth 41 and provided with a female buckle 24. A portion of each shoulder belt 21 in front of the backrest portion 12 is provided with a male buckle 25 matching the female buckle 24, and a rear end of each shoulder belt 21 passing through the corresponding shoulder belt hole 120 is connected to a rear end of the adjustment belt 22 through, for example, a same fastener (not shown in FIG. 1, located behind the backrest portion 12). A front end 221 of the adjustment belt 22 extends forward in the seat portion 11 until it passes through the through hole 401 of the seat cloth 41. When the front end of the adjustment belt 22 is pulled, a length of each shoulder belt 21 in front of the backrest portion 12 can be reduced, thereby restraining a child sitting on the child safety seat 100. The locking member 3 is mounted in the seat portion 11 and configured to lock the adjustment belt 22 to prevent release of each shoulder belt 21 caused by undesired movement of the adjustment belt 22. As can be seen from FIG. 2, a front end of the seat portion 11 is provided with a recess 110, the locking member 3 is accommodated in the recess 110, the front end of the adjustment belt 22 passes through the locking member 3 in the recess 110, and the recess 110 can further guide the adjustment belt 22, so that the front end 221 of the adjustment belt 22 passes through the through hole 401 and is exposed from the seat cloth 41.

It is to be noted that, unless otherwise specified and limited, the orientation terms "front", "back", "up", and "down" in this embodiment correspond to "front", "back", "up" and "down" directions of a child sitting on the child safety seat 100, and the "front" and "back" directions are illustrated by arrows F and B respectively in the figure. These orientation terms are intended only to make the description of the embodiments of the present disclosure clearer, and are not intended to improperly limit the protection scope of the present disclosure.

In the related art, the locking member 3 is configured to lock the adjustment belt 22 so that the adjusting belt 22 can only move in a single direction. More specifically, when the locking member 3 is in a locked state where the adjustment belt 22 is locked, the adjustment belt 22 is allowed to be pulled forward to reduce the length of each shoulder belt 21 in front of the backrest portion 12, so that the shoulder belt 21 restrains the child, but the adjustment belt 22 is not allowed to move backward to lead to lengthening of the length of each shoulder belt 21 in front of the backrest portion 12.

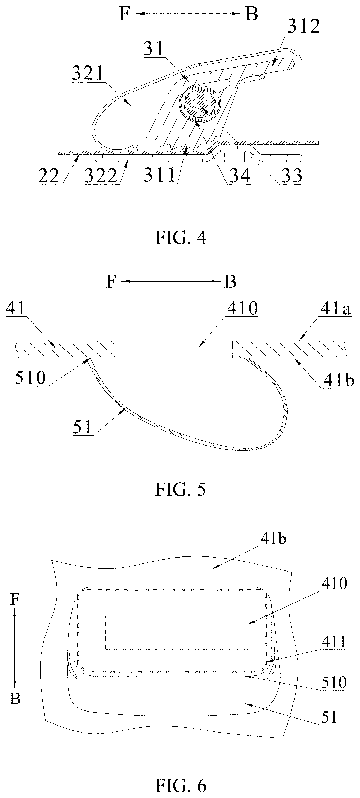

FIG. 3 and FIG. 4 show a configuration of the locking member 3. The locking member 3 includes a clamping plate 31, a bracket 32, a pivot shaft 33, and a torsion spring 34. The bracket 32 generally has a U-shaped structure, including a bottom wall 322 and two opposite side walls 321 extending from the bottom wall. A middle portion of the clamping plate 31 is mounted on the two opposite side walls 321 of the bracket 32 through the pivot shaft 33, and the adjustment belt 22 passes through the bottom wall 322 of the bracket 32 and the clamping plate 31. The clamping plate 31 may rotate around the pivot shaft 33 to clamp the adjustment belt 22 when the locking member 3 is in the locked state, and release the adjustment belt 22 when the locking member 3 is in an unlocked state. The torsion spring 34 sleeves the pivot shaft 33, and two spring arms of the torsion spring 34 are respectively connected to the bracket 32 and the clamping plate 31. The torsion spring 34 is configured to keep the clamping plate 31 in a state of clamping the adjustment belt 22. It may be understood that the configuration of the locking member 3 may be modified in many manners, and is not limited to the example herein.

Referring to FIG. 4, when the locking member 3 is in the locked state, the adjustment belt 22 is clamped between a first end 311 of the clamping plate 31 and the bottom wall 322 of the bracket 32. The first end 311 of the clamping plate 31 is provided with ratchet teeth. When the locking member 3 is in the locked state, the adjustment belt 22 is allowed to be pulled forward along the arrow F, but the adjustment belt 22 is not allowed to be pulled backward along the arrow B. When a second end 312 of the clamping plate 31 is pressed, the clamping plate 31 may overcome a force of the torsion spring 34 and rotate clockwise around the pivot shaft 33, thereby releasing the clamping for the adjustment belt 22. In this case, the adjustment belt 22 can be pulled back and forth. Before the child sits on the child safety seat 100, there is generally a need to loosen the length of each shoulder belt 21 in front of the backrest portion 12 in advance. This requires the hand to pass through the operation port 410 to press the second end 312 of the clamping plate 31 to cause the locking member 3 to unlock the adjustment belt 22 and then pull each shoulder belt 21 forward. After the child sits on the child safety seat 100, the locking member 3 remains in the locked state. The child can be easily restrained in the child safety seat 100 by first fastening the male buckle 25 of each shoulder belt 21 and the female buckle 24 of the crotch belt and then pulling the adjustment belt 22 forward to shorten the length of each shoulder belt 21 in front of the backrest portion 12.

Referring to FIG. 1 and FIG. 2 together, the child safety seat 100 further includes a barrier structure 5. The barrier structure 5 is configured to block or prevent sundries (such as food or toy parts) from falling into the recess 110 through the operation port 410 and entering the locking member 3, preventing trapping of the locking member 3 caused by the sundries, thereby ensuring normal operation of the locking member 3 and the child safety seat. The barrier structure 5 may be implemented in various manners, provided that the sundries can be prevented from easily falling into the locking member 3 through the operation port 410.

Referring to FIG. 2, the barrier structure 5 may include a blocking bag 51 with a predetermined depth. Referring to FIG. 5, a mouth 510 of the blocking bag 51 is arranged around the operation port 410, and the mouth 510 of the blocking bag 51 is connected to the seat cloth 41. On the one hand, the blocking bag 51 can provide an enough depth to allow the hand to extend into the recess 110 to unlock the locking member 3. On the other hand, the blocking bag 51 can collect the sundries falling into the operation port 410, so as to effectively prevent influence on the normal operation of the locking member 3 caused by falling of the sundries into the locking member 3. It may be understood that a periphery of the mouth 510 of the blocking bag 51 may be continuously connected to the seat cloth 41 to prevent a large gap between the two.

Referring to FIG. 1, FIG. 2, FIG. 5, and FIG. 6 together, the seat cloth 41 has an outer side surface 41a for contacting with the child and an inner side surface 41b opposite to the seat portion 11. For the convenience of showing the configuration of the blocking bag 51, in FIG. 2, the seat cloth 41 is upturned and separated from the seat portion 11, so that the inner side surface 41b of the seat cloth 41 is exposed. Referring to FIG. 6, the periphery of the mouth 510 of the blocking bag 51 may be connected to the inner side surface 41b of the seat cloth 41 by sewing, thereby forming an annular sewing line at a first position 411 of the inner side surface 41b of the seat cloth 41. Certainly, the manner in which the periphery of the mouth 510 of the blocking bag 51 is connected to the inner side surface 41b of the seat cloth 41 is not limited to sewing. In some embodiments, the two may be connected by gluing or in other suitable manners.

The blocking bag 51 may be a cloth bag. In some embodiments, the blocking bag 51 may be made of elastic fabric. The blocking bag 51 made of elastic fabric may provide a sufficient depth with a smaller size, which can prevent a possible problem caused by suspension of the large-sized blocking bag 51 in the recess 110.

Referring to FIG. 2 again, the operation port 410 may be arranged obliquely in front of the locking member 3. When the locking member 3 is required to be unlocked, the hand is required to be inserted obliquely downward into the operation port 410 from front to back to operate the locking member 3, so as to prevent accidental unlock of the locking member 3 caused by accidental touch of the clamping plate 31 of the locking member 3 through the operation port 410 by the child sitting on the child safety seat 100. In some embodiments, the seat cloth 41 may be provided with a hard partition plate 45, and the partition plate 45 is arranged above the recess 110 and configured to cover the locking member 3. It may be understood that the partition plate 45 is behind the operation port 410. Through the arrangement of the partition plate 45, the accidental unlock of the locking member 3 caused by accidental pressing on the seat cloth 41 above the locking member 3 by the child's hand or foot can be further prevented. The partition plate 45 may be, for example, a plastic board such as a PE board or a PP board. The partition plate 45 may be for example, sewn into the seat cloth 41.

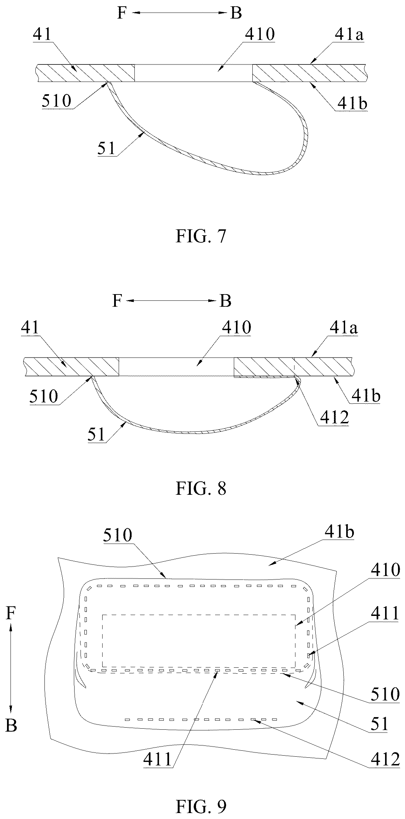

Referring to FIG. 5 and FIG. 6 together, as described above, the periphery of the mouth 510 of the blocking bag 51 is connected to the first position 411 of the inner side surface 41b of the seat cloth 41 to form an annular sewing line. The first position 411 is separated from edges of the operation port 410 by a certain distance, so that the operation port 410 is located in the middle of a region surrounded by the first position 411. In some modified embodiments, referring to FIG. 7, a part of a periphery of the mouth 510 of the blocking bag 51 may be connected to the inner side surface 41b of the seat cloth 41 at a certain distance from a part of a periphery of the operation port 410, and another part of the periphery of the mouth 510 of the blocking bag 51 may be connected to the inner side surface 41b of the seat cloth 41 by substantially overlapping with a part of the periphery of the operation port 410. In some other modified embodiments, the periphery of the mouth 510 of the blocking bag 51 may be connected to the seat cloth 41 by completely overlapping with the periphery of the operation port 410. In some other modified embodiments, the mouth 510 of the blocking bag 51 surrounds the operation port 410 and is connected to the outer side surface 41a of the seat cloth 41, and a bag body of the blocking bag 51 extends into the recess 110 through the operation port 410.

FIG. 8 and FIG. 9 show yet another modified embodiment of a manner in which the blocking bag 51 is connected to the seat cloth 41. In addition to connecting the periphery of the mouth 510 of the blocking bag 51 to the first position 411 of the inner side surface 41b of the seat cloth 41, part of the bag body of the blocking bag 51 is connected to a second position 412 of the inner side surface 41b of the seat cloth 41. The second position 412 is farther away from the operation port 410 than the first position 411, so as to position a suspended end of the blocking bag 51. In some embodiments, the bag body of the blocking bag 51 is connected to the second position 412 of the seat cloth 41 by, for example, sewing or gluing. In some embodiments, the second position 412 is behind the operation port 410, so as to adapt to a movement direction when the hand is inserted into the operation port 410 to unlock the locking member 3.

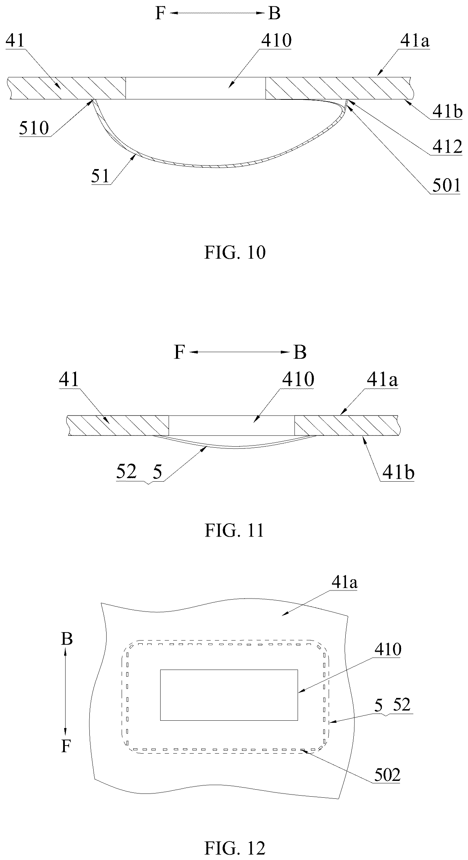

FIG. 10 shows still another modified embodiment of a manner in which the blocking bag 51 is connected to the seat cloth 41. In addition to connecting the periphery of the mouth 510 of the blocking bag 51 to the first position 411 of the inner side surface 41b of the seat cloth 41, part of the bag body of the blocking bag 51 is connected to the second position 412 of the inner side surface 41b of the seat cloth 41 through a traction belt 501, so as to position the suspended end of the blocking bag 51. In some embodiments, the traction belt 501 may be an elastic traction belt.

Referring to FIG. 11 and FIG. 12, a partial sectional view and a partial top view of a child safety seat 100 according to a second embodiment of the present disclosure are shown. A main difference between the second embodiment and the above first embodiment lies in the implementation of the barrier structure 5, and parts the same as or similar to those in the above first embodiment are not described in detail herein.

Referring to FIG. 11 and FIG. 12, the barrier structure 5 includes a first blocking sheet 52 made of elastic fabric, and a periphery of the first blocking sheet 52 is connected to the seat cloth 41 to close the operation port 410. The first blocking sheet 52 made of elastic fabric has certain elasticity, and the first blocking sheet 52 can be elastically deformed with a force applied by the hand, so as to allow the hand to enter the operation port 410 and unlock the locking member 3 through the first blocking sheet 52.

As shown in FIG. 12, the periphery of the first blocking sheet 52 is connected to the inner side surface 41b of the seat cloth 41 by, for example, sewing to form an annular sewing line 502. An area of the first blocking sheet 52 is larger than that of the operation port 410 to provide a large enough elastic deformation. In some other embodiments, the periphery of the first blocking sheet 52 may be connected to the inner side surface 41b of the seat cloth 41 by, for example, gluing, buttoning, or the like.

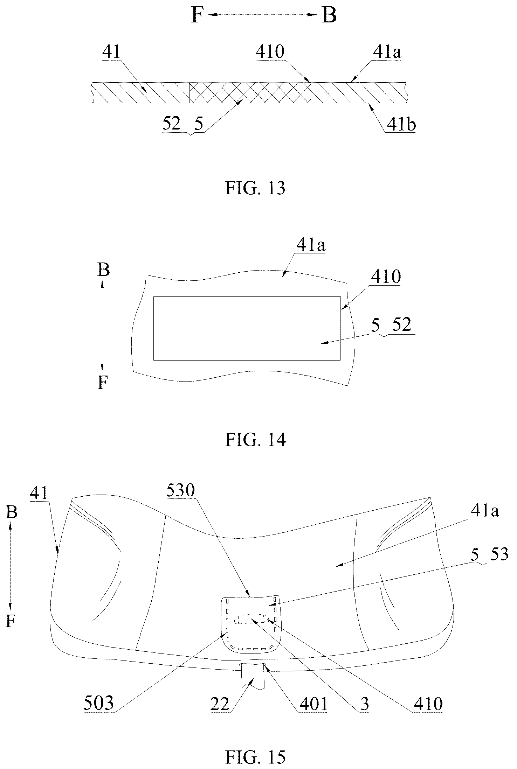

FIG. 13 and FIG. 14 show a modified embodiment of a manner in which the first blocking sheet 52 is connected to the seat cloth 41. The periphery of the first blocking sheet 52 may be connected to the periphery of the operation port 410, so that the first blocking sheet 52 is located in the operation port 410, which does not affect the appearance of the child safety seat 100 and can also prevent trapping of debris from in the gap between the first blocking sheet 52 and the seat cloth 41. It may be understood that, in some modified embodiments not shown, the periphery of the first blocking sheet 52 made of elastic fabric may be connected to, for example, the outer side surface 41a of the seat cloth 41 to close the operation port 410, and can also prevent falling of the sundries into the locking member 3 through the operation port 410.

In some embodiments, the operation port 410 closed by the first blocking sheet 52 is located obliquely in front of the locking member 3. In this case, the seat cloth 41 may also be provided with the partition plate 45 in the above first embodiment.

In some embodiments, the operation port 410 may be arranged directly above the locking member 3, so that a distance between the operation port 410 and the locking member 3 is minimum, which can reduce a requirement on elastic deformation capability of the first blocking sheet 52. In this case, the seat cloth 41 may not be provided with the above partition plate 45.

Referring to FIG. 15, a partial top perspective view of a child safety seat 100 according to a third embodiment of the present disclosure is shown. A main difference between the third embodiment and the foregoing embodiments lies in the implementation of the barrier structure 5, and parts the same as or similar to those in the foregoing embodiments are not described in detail herein.

As shown in FIG. 15, the barrier structure 5 includes a second blocking sheet 53 covering the operation port 410 on the outer side surface 41a of the seat cloth 41. A part of a periphery of the second blocking sheet 53 is connected to the outer side surface 41a of the seat cloth 41 by, for example, sewing to form a non-closed sewing line 503, and a gap 530 communicated with the operation port 410 is formed between another part of the periphery of the second blocking sheet 53 and the outer side surface 41a of the seat cloth 41. The hand passes through the gap 530 and the operation port 410 to unlock the locking member 3. The second blocking sheet 53 may be made of fabric, or further be made of elastic fabric. It may be understood that, when the locking member 3 is unlocked not through the operation port 410, the second blocking sheet 53 is fitted with the seat portion 41 to cover the operation port 410, the gap 530 may be ignored basically, and the second blocking sheet 53 may effectively prevent the sundries from falling into the locking member 3 through the operation port 410. When there is a need to unlock the locking member 3, the hand may open up the gap 530, and then enter the operation port 410 and unlock the locking member 3.

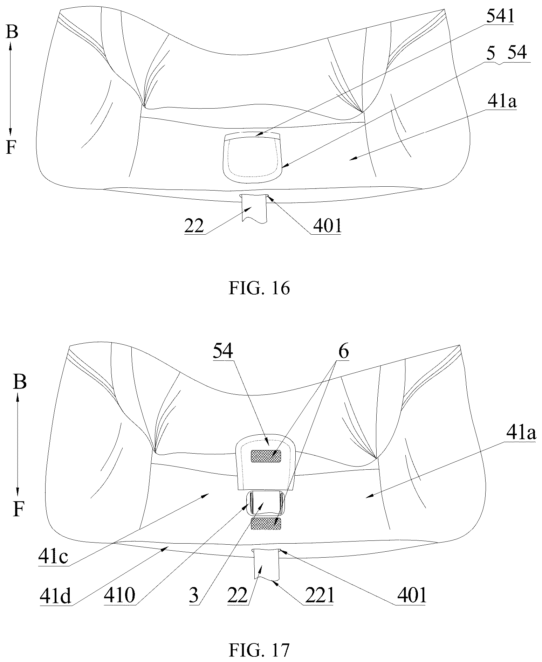

Referring to FIG. 16 and FIG. 17, a partial top view of a child safety seat 100 according to a fourth embodiment of the present disclosure is shown. A main difference between the fourth embodiment and the foregoing embodiments lies in the implementation of the barrier structure 5, and parts the same as or similar to those in the foregoing embodiments are not described in detail herein.

As shown in FIG. 16 and FIG. 17, the barrier structure 5 includes a first flip cover 54, and a rear edge 541 of the first flip cover 54 is connected to, for example, the outer side surface 41a of the seat cloth 41. The first flip cover 54 may rotate downward around the rear edge 541 thereof to a closed position to close the operation port 410 (FIG. 16), thereby preventing the sundries from entering the locking member 3 through the operation port 410. The first flip cover 54 may rotate upward around the rear edge 541 thereof to an open position to expose the operation port 410 (FIG. 17), so as to unlock the locking member 3 through the operation port 410.

Referring to FIG. 17, a holding device 6 configured to hold the first flip cover 54 at the closed position is arranged between the first flip cover 54 and the seat cloth 41. When there is no need to unlock the locking member 3, the holding device 6 stably holds the first flip cover 54 at the closed position. The holding device 6 may be implemented in a variety of manners. For example, the holding device 6 may include fasteners cooperating with each other, and the fasteners are hook and loop fasteners (such as Velcro), magnetic members, snaps or the like.

As can be seen from FIG. 17, a side surface of the seat cloth 41 facing the child's buttocks is a top side surface 41c, and a side surface folded down from the top side surface 41c is a front side surface 41d, and the front side surface 41d basically facing forward may form a support for the child's calf. The operation port 410 is arranged on the top side surface 41c of the seat cloth 41, and the through hole 401 for the front end 221 of the adjustment belt 22 to pass through is arranged on the front side surface 41d of the seat cloth 41. The first flip cover 54, when at the closed position, covers the operation port 410 but does not cover the through hole 401.

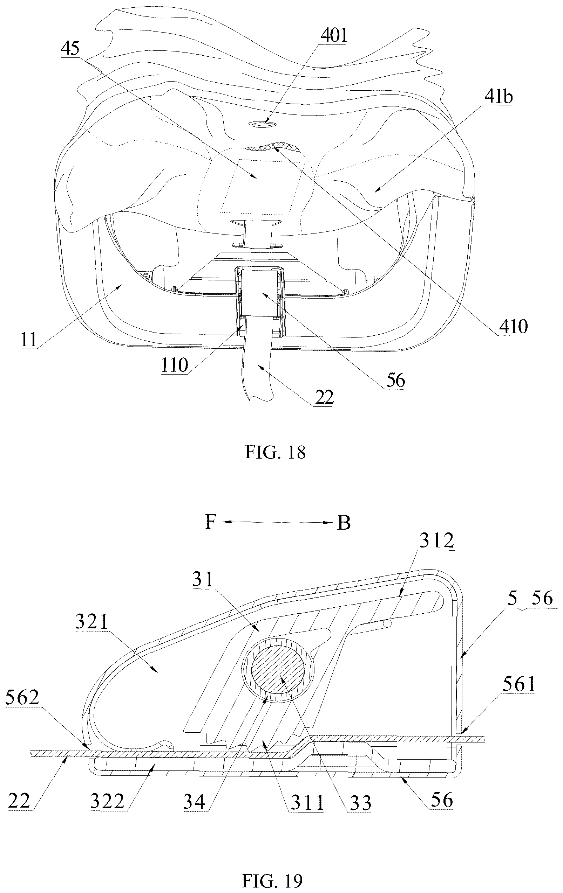

Referring to FIG. 18, a partial top view of a child safety seat 100 according to a fifth embodiment of the present disclosure is shown. A main difference between the fifth embodiment and the foregoing embodiments lies in the implementation of the barrier structure 5, and parts the same as or similar to those in the above first embodiment are not described in detail herein.

Referring to FIG. 18 and FIG. 19 together, in the fifth embodiment, the barrier structure 5 includes an adhesive layer 56 covering the locking member 3, and the adhesive layer 56 is provided with an inlet 561 and an outlet 562 for the front end 221 of the adjustment belt 22 to pass through. The front end 221 of the adjustment belt 22 enters between the clamping plate 31 and the bottom wall 322 of the locking member 3 through the inlet 561, and extends forward through the outlet 562. The adhesive layer 56 is elastic, and is made of, for example, soft glue such as silica gel. The adhesive layer 56 may be elastically deformed, so that, on the one hand, the unlocking operation on the locking member 3 (pressing the second end 312 of the clamping plate 31 through the adhesive layer 56) may not be affected, and on the other hand, a gap between the adhesive layer 56 and the adjustment belt 22 at the inlet 561 and the outlet 562 is small, which can effectively prevent the sundries from entering the locking member 3, preventing trapping of the locking member 3 due to intrusion of the sundries.

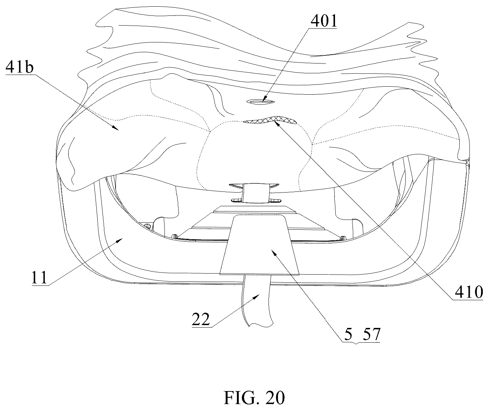

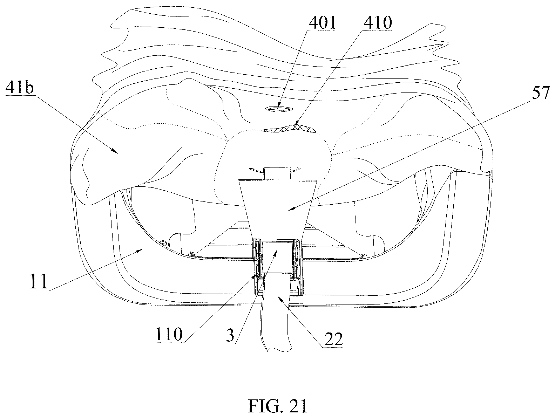

Referring to FIG. 20 and FIG. 21, a partial top view of a child safety seat 100 according to a sixth embodiment of the present disclosure is shown. A main difference between the sixth embodiment and the foregoing embodiments lies in the implementation of the barrier structure 5, and parts the same as or similar to those in the above first embodiment are not described in detail herein.

As shown in FIG. 20, the barrier structure 5 includes a second flip cover 57, a rear end of the second flip cover 57 is pivotally connected to the seat portion 11 through a pivot shaft (not shown in the figure), and a front end of the second flip cover 57 is used as an operating end. After the hand enters an inner side of the seat cloth 41 from the operation port 410, the second flip cover 57 may be rotated around the pivot shaft by applying a torque to the front end of the second flip cover 57. The second flip cover 57 may rotate around the pivot shaft to a closed position to cover the recess 110 above the locking member 3, to prevent entry of the sundries falling from the operation port 410 into the locking member 3. As shown in FIG. 21, the second flip cover 57 may rotate around the pivot shaft to an open position to open the top of the recess 110 to expose the locking member 3, so as to unlock the locking member 3.

In some embodiments, an elastic member (not shown in the figure) may be provided between the second flip cover 57 and the seat portion 11, and the elastic member is configured to hold the second flip cover 57 at the closed position. The elastic member is, for example, a torsion spring, and sleeves the pivot shaft of the second flip cover 57.

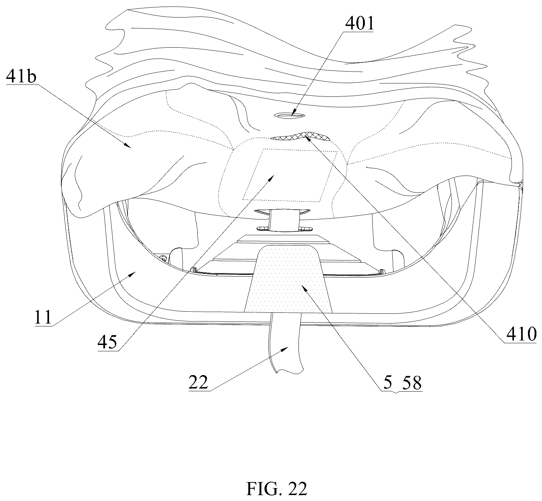

Referring to FIG. 22, a partial top view of a child safety seat 100 according to a seventh embodiment of the present disclosure is shown. A main difference between the seventh embodiment and the foregoing embodiments lies in the implementation of the barrier structure 5, and parts the same as or similar to those in the above first embodiment are not described in detail herein.

As shown in FIG. 22, the barrier structure 5 includes a third blocking sheet 58 made of elastic fabric, and the third blocking sheet 58 is connected to the seat portion 11 and covers the recess 110 above the locking member 3 to separate the locking member 3 from the operation port 410. The third blocking sheet 58 may be fastened to the seat portion 11 in any suitable manner such as gluing, clipping, or buttoning.

When there is a need to unlock the locking member 3, the hand extends from the operation port 410 into the inner side of the seat cloth 41 and then presses the third blocking sheet 58, and the third blocking sheet 58 made of elastic fabric is elastically deformed to allow the hand to touch the locking member 3 and unlock the locking member 3. The third blocking sheet 58 covering the recess 110 and located above the locking member 3 may effectively block the sundries falling from the operation port 410 from entering the locking member 3.

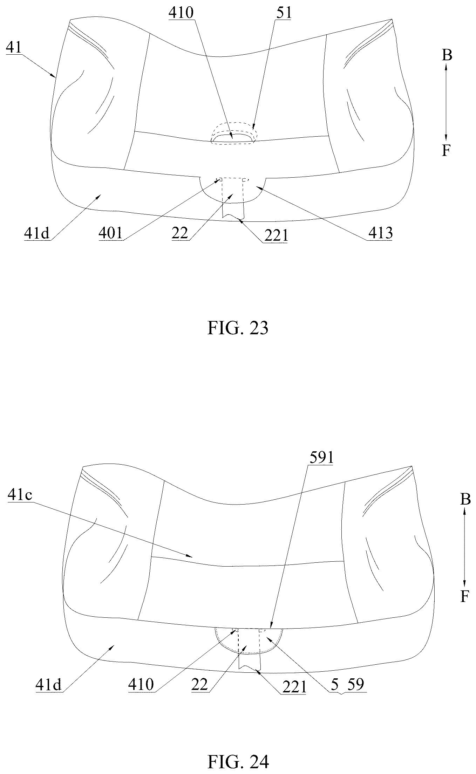

Referring to FIG. 23, a partial top view of a child safety seat 100 according to an eighth embodiment of the present disclosure is shown. Compared with the foregoing embodiments, in the eighth embodiment, in addition to the barrier structure 5 (the barrier structure 5 is illustrated as a blocking bag 51 in FIG. 23) provided on the child safety seat 100, the seat cloth 41 is further provided with a shielding brim 413 for shielding the through hole 401. Parts in the eighth embodiment the same as or similar to those in the foregoing embodiments are not described in detail herein.

As shown in FIG. 23, the through hole 401 is arranged on the front side surface 41d of the seat cloth 41, and is located in front of the operation port 410. The front end 221 of the adjustment belt 22 passes through the through hole 401. The shielding brim 413 is arranged above the through hole 401. The shielding brim 413 plays a role of shielding the through hole 401. In some embodiments, the shielding brim 413 may have, for example, an integral structure with a material of which the top side surface 41c of the seat cloth 41 is made. The shielding brim 413 shields the through hole 401 from above. When the adjustment belt 22 is not pulled, a front edge of the shielding brim 413 may droop naturally, so that the through hole 401 is shielded, which can prevent easy entry of the sundries into the locking member 3 through the through hole 401. In some embodiments, a detachable connection structure such as Velcro or a snap fastener may be provided between the front edge of the shielding brim 413 and the front side surface 41d of the seat cloth 41.

Referring to FIG. 24, a partial top view of a child safety seat 100 according to a ninth embodiment of the present disclosure is shown. A main difference between the ninth embodiment and the foregoing embodiments lies in the implementation of the barrier structure 5 and the arrangement position of the operation port 410, and parts the same as or similar to those in the foregoing embodiments are not described in detail herein.

As shown in FIG. 24, the operation port 410 is arranged on the front side surface 41d of the seat cloth 41, and the front end 221 of the adjustment belt 22 passes through the operation port 410. In this way, the seat cloth 41 is not required to be additionally provided with the through hole 401 for the adjustment belt 22 to pass through. The barrier structure 5 includes a third flip cover 59 for shielding the operation port 410. More specifically, a rear edge 591 of the third flip cover 59 is connected to the seat cloth 41 by, for example, sewing, and the rear edge of the third flip cover 59 is located above the operation port 410. A front edge of the third flip cover 59 naturally droops under gravity, and the operation port 410 can be covered. In some embodiments, a detachable connection structure such as Velcro or a snap fastener may be provided between the front edge of the third flip cover 59 and the front side surface 41d of the seat cloth 41.

In the ninth embodiment, the operation port 410 is moved forward to allow the front end 221 of the adjustment belt 22 to protrude from the operation port 410, which can omit the through hole 401 to simplify the structure of the seat cloth 41, and can also make it much more difficult for the sundries falling from above to fall directly into operation port 410. The third flip cover 59 shields the operation port 410, which further increases the difficulty for the sundries to enter the locking member 3 through the operation port 410. When there is a need to unlock the locking member 3, the hand is inserted into the operation port 410 from below the first flip cover 54, and the locking member 3 can be operated.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the invention. It should be noted that those of ordinary skill in the art may further make variations and improvements without departing from the conception of the present disclosure, and these all fall within the protection scope of the present disclosure. Therefore, the patent protection scope of the present disclosure should be subject to the appended claims.

## Claims

1. A child safety seat (100), comprising:
a seat housing (1) comprising a seat portion (11) for supporting a hip of a child;
an adjustment belt (22) having a rear end connected to a shoulder belt (21) of the child safety seat (100), and a front end passing through a front end of the seat portion (11);
a locking member (3) arranged in the seat portion (11) and locking the adjustment belt (22) to prevent movement of the adjustment belt (22);
a seat cover (4) comprising seat cloth (41) covering the seat portion (11), the seat cloth (41) being provided with an operation port (410) for allowing a hand to pass through to unlock the locking member (3); and
a barrier structure (5) configured to effectively prevent sundries from entering the locking member through the operation port, in particular to prevent,
through the operation port (410), sundries from falling into the locking member (3).

2. The child safety seat (100) according to claim 1, wherein the barrier structure (5) comprises a blocking bag (5) with a predetermined depth.

3. The child safety seat (100) according to claim 2, wherein a mouth (510) of the blocking bag (5) is arranged around the operation port (410) and connected to the seat cloth (41);
optionally wherein the blocking bag (5) is made of elastic fabric; and/or
optionally wherein a periphery of the mouth (510) of the blocking bag (5) is connected to the seat cloth (41) by sewing or gluing.

4. The child safety seat (100) according to claim 2 or 3, wherein
the periphery of the mouth (510) of the blocking bag (5) is connected to a first position (411) of the seat cloth (41), and part of a body of the blocking bag (5) is connected to a second position (412) on an inner side surface (41b) of the seat cloth (41), the second position (412) being further away from the operation port (410) than the first position (411); and
optionally wherein the part of the body of the blocking bag (5) is connected to the second position through a traction belt (501), or the part of the body of the blocking bag (5) is connected to the second position (412) by sewing or gluing.

5. The child safety seat (100) according to the preceding claim 4, wherein the periphery of the mouth (510) of the blocking bag (51) is connected to the first position (411) of a inner side surface (41b) of the seat cloth (41); wherein the second position (412) is farther away from the operation port (410) than the first position (411), so as to position a suspended end of the blocking bag (51); optionally wherein
- the second position (412) is behind the operation port (410), so as to adapt to a movement direction when the hand is inserted into the operation port (410) to unlock the locking member (3).

6. The child safety seat (100) according to any one of claims 2 or 3, wherein the seat cloth (41) has an outer side surface (41a) for contacting with the child and an inner side surface (41b) opposite to the seat portion (11); wherein
- a part of a periphery of the mouth (510) of the blocking bag (51) is connected to the inner side surface (41b) of the seat cloth (41) at a certain distance from a part of a periphery of the operation port (410), and another part of the periphery of the mouth (510) of the blocking bag (51) is connected to the inner side surface (41b) of the seat cloth (41) by substantially overlapping with a part of the periphery of the operation port (410); and/or
- the periphery of the mouth (510) of the blocking bag (51) being connected to the seat cloth (41) by completely overlapping with the periphery of the operation port (410); and/or
- the mouth (510) of the blocking bag (51) surrounding the operation port (410) and being connected to the outer side surface (41a) of the seat cloth (41), and a bag body of the blocking bag (51) extending into the recess (110) through the operation port (410).

7. The child safety seat (100) according to any one of claims 2 to 3, wherein the seat cloth (41) has an outer side surface (41a) for contacting with the child and an inner side surface (41b) opposite to the seat portion (11); the periphery of the mouth (510) of the blocking bag (51) being connected to the inner side surface (41b) of the seat cloth (41);
- optionally the blocking bag (51) being connected to the inner side surface (41b) of the seat cloth (41)
▪ by gluing, OR
▪ by sewing, thereby forming an annular sewing line at a first position (411) of the inner side surface (41b) of the seat cloth (41);
- optionally wherein the first position (411) is separated from edges of the operation port (410) by a distance, so that the operation port (410) is located in the middle of a region surrounded by the first position (411).

8. The child safety seat (100) according to claim 2 or 4, wherein the seat cloth (41) has an outer side surface (41a) for contacting with the child and an inner side surface (41b) opposite to the seat portion (11); the periphery of the mouth (510) of the blocking bag (51) being connected to a first position (411) of the inner side surface (41b) of the seat cloth (41), and part of the bag body of the blocking bag (51) being connected to a second position (412) of the inner side surface (41b) of the seat cloth (41) through a traction belt (501), so as to position the suspended end of the blocking bag (51), optionally wherein the traction belt (501) is an elastic traction belt.

9. The child safety seat (100) according to any one of claims 2 to 8, wherein
- the blocking bag (51) provides enough depth to allow the hand to extend into the recess (110) to unlock the locking member (3); and the blocking bag (51) being configured to collect sundries falling into the operation port (410); and/or
- a periphery of the mouth (510) of the blocking bag (51) being continuously connected to the seat cloth (41) to prevent a large gap between the blocking bag (51) and the seat cloth (41).

10. The child safety seat (100) according to any one of claims 2 to 9, wherein
- The blocking bag (51) is a cloth bag; OR
- The blocking bag (51) is made of elastic fabric and providing a sufficient depth with a size preventing suspension of the blocking bag (51) in the recess (110).

11. The child safety seat (100) according to any one of claims 2 to 10, wherein the operation port (410) is arranged obliquely in front of the locking member (3), so that when the locking member (3) is required to be unlocked, the hand is required to be inserted obliquely downward into the operation port (410) from front to back to operate the locking member (3).

12. The child safety seat (100) according to any one of claims 1 to11, wherein the barrier structure (5) comprises a first blocking sheet (50) made of elastic fabric, a periphery of the first blocking sheet (50) being connected to the seat cloth (41) to close the operation port (410).

13. The child safety seat (100) according to claim 12, wherein:
the periphery of the first blocking sheet (50) is connected to an inner side surface of the seat cloth (41), in particular wherein an area of the first blocking sheet (50) is larger than that of the operation port (410); or
wherein the periphery of the first blocking sheet (50) is connected to a periphery of the operation port (410), so that the first blocking sheet (50) is located in the operation port (410).

14. The child safety seat (100) according to claim 12 or 13, wherein the operation port (410) is located directly above the locking member (3).

15. The child safety seat (100) according to any one of claims 1 to 14, wherein the barrier structure (5) comprises a second blocking sheet (53) covering the operation port (410) on an outer side surface of the seat cloth (41), in particular wherein a part of a periphery of the second blocking sheet (53) being connected to the outer side surface of the seat cloth (41), another part of the periphery of the second blocking sheet (53) being connected to the outer side surface of the seat cloth (41) to form a gap communicated with the operation port (410).

16. The child safety seat (100) according to any one of claims 1 to 15, wherein:
the barrier structure (5) comprises a first flip cover (54), a rear edge of the first flip cover (54) being connected to an outer side surface of the seat cloth (41); in particular wherein
the first flip cover (54) is rotatable downward around the rear edge thereof to a closed position to close the operation port (410), and/or the first flip cover (54) is rotatable upward around the rear edge thereof to an open position to expose the operation port (410).

17. The child safety seat (100) according to claim 16, wherein a holding device (6) configured to hold the first flip cover (54) at the closed position is arranged between the first flip cover (54) and the seat cloth (41); and
optionally wherein the holding device (6) comprises fasteners cooperating with each other, the fasteners in particular being hook and loop fasteners, magnetic members, or snaps.

18. The child safety seat (100) according to any one of claims 1 to 17, wherein the barrier structure (5) comprises an adhesive layer (56) covering the locking member (3), the adhesive layer (56) being provided with an inlet (561) and an outlet (562) for the adjustment belt (22) to pass through.

19. The child safety seat (100) according to any one of claims 1 to 18, wherein:
the seat portion (11) comprises a recess (110) for accommodating the locking member (3);
the barrier structure (5) comprises a second flip cover (57) having a rear end connected to the seat portion (11) through a pivot shaft, and a front end used as an operating end;
the second flip cover (57) is rotatable around the pivot shaft to a closed position to cover the recess (110) above the locking member (3), and the second flip cover (57) is rotatable around the pivot shaft to an open position to expose the locking member (3); and
optionally wherein an elastic member is provided between the second flip cover (57) and the seat portion (11), the elastic member being configured to hold the second flip cover (57) at the closed position.

20. The child safety seat (100) according to any one of claims 1 to 18, wherein:
the seat portion (11) comprises a recess (110) for accommodating the locking member (3); and
the barrier structure (5) comprises a third blocking sheet (58) made of elastic fabric, the third blocking sheet (58) being connected to the seat portion (11) and covering the recess (110) above the locking member (3) to separate the locking member (3) from the operation port (410).

21. The child safety seat (100) according to any one of claims 1 to 20, wherein:
the operation port (410) is arranged on a front side surface of the seat cloth (41), and the front end of the adjustment belt (22) passes through the operation port (410); and
the barrier structure (5) comprises a third flip cover (59), a rear edge of the third flip cover (59) being connected to the seat cloth (41) and located above the operation port (410), so that the third flip cover (59) shields the operation port (410).

22. The child safety (100) seat according to any one of claims 1 to 20, wherein:
a front side surface of the seat cloth (41) is provided with a through hole (401), and the adjustment belt (22) passes through the through hole (401); and
the seat cloth (41) is provided with a shielding brim (413) above the through hole (401), the shielding brim (413) shielding the through hole (401).

23. The child safety seat (100) according to any one of claims 1 to 18, wherein:
the seat portion (11) comprises a recess (110) for accommodating the locking member (3);
the seat cloth (41) being provided with a partition plate (45) arranged above the recess (110) and covering the locking member (3); and
the operation port (410) is located in front of the partition plate (45).

24. The child safety seat (100) according to claim 23, wherein
- The partition plate (45) is a hard partition plate (45), in particular a plastic board, a PE board or a PP board, optionally wherein the partition plate (45) is sewn into the seat cloth (41).

25. The child safety seat (100) according to any one of claims 1 to 24, wherein
- the child safety seat (100) is an infant carrier, optionally comprising a handle (8); and/or
- the seat cover (4) covers the exterior of the seat housing (1); and/or
- the seat cloth (41) is provided with a through hole (401), a front end (221) of the adjustment belt (22) extending forward in the seat portion (11) until it passes through the through hole (401), optionally wherein the operation port (410) is located behind the through hole (401); and/or
- the locking member (3) being mounted in the seat portion (11) and configured to lock the adjustment belt (22) to prevent release of each shoulder belt (21) caused by undesired movement of the adjustment belt (22).

26. The child safety seat (100) according to any one of claims 1 to 26, wherein
- The locking member (3) includes a clamping plate (31), a bracket (32), a pivot shaft (33), and a torsion spring (34); the bracket (32) having a U-shaped structure, including a bottom wall (322) and two opposite side walls (321) extending from the bottom wall (322); wherein a middle portion of the clamping plate (31) is mounted on the two opposite side walls (321) of the bracket (32) through the pivot shaft (33), and the adjustment belt (22) passing through the bottom wall (322) of the bracket (32) and the clamping plate (31);
- optionally wherein the clamping plate (31) rotates around the pivot shaft (33) to clamp the adjustment belt (22) when the locking member (3) is in the locked state, and release the adjustment belt (22) when the locking member (3) is in an unlocked state; and/or
- the torsion spring (34) sleeving the pivot shaft (33), two spring arms of the torsion spring (34) being respectively connected to the bracket (32) and the clamping plate (31); the torsion spring (34) being configured to keep the clamping plate (31) in a state of clamping the adjustment belt (22).
